# EUROPEAN PATENT APPLICATION

(11) **EP 1 988 655 A1**
(43) Date of publication of application: **05.11.2008**
(21) Application number: 07107475.1
(22) Date of filing: 03.05.2007
(51) Int. Cl.: H04L 1/00, H04L 9/32

(54) **Method and apparatus for using an error code in transmission of data**

(71) Applicant: NTT DoCoMo, Inc., Tokyo (JP)
(72) Inventor: Loyola, Luis, 80539 Munich (DE); Widmer, Jörg, 81539 Munich (DE)
(74) Representative: Betten & Resch

(57) **Abstract**

A method for using an error code in transmission of data from a transmitter to a receiver, said method comprising on the transmitter side:
calculating an error code based on the data to be transmitted;
encoding said calculated error code using an identifier which is specific for a particular entity or feature on the transmitter side to obtain an encoded error code;
transmitting said encoded error code and said data to be transmitted from said transmitter to said receiver, and said method comprising at the receiver side:
calculating an error code based on the data which has been transmitted;
encoding said calculated error code using an identifier which is specific for a particular entity or feature in the transmitter side to obtain an encoded error code;
comparing said encoded error code which has been obtained on the receiver side with the encoded error code which has been transmitted by said transmitter;
filtering the data which has been transmitted from said transmitter to said receiver based on said comparison result.

## Description

### FIELD OF INVENTION

The present invention relates to a method and an apparatus for using an error code in transmission of data. The method can be applied for various types of packet filtering in wireless local area networks, sensor networks, multi-hop networks, as well as shared medium wired networks.

### BACKGROUND OF THE INVENTION

Filtering non-desired packets in network nodes is an important issue as it generally involves processing and energy consumption in mobile devices with small processors and large energy constraints. This is mainly because whatever the application, the earlier on packets can be filtered, the lower the overhead. In particular, filtering packets at the network layer, transport layer of even in higher layers of the OSI reference model on the receiver side is a waste of resources. Early filtering allows terminals to save time along with valuable energy and processing power.

The related problem will now be described in somewhat more detail for the case of wireless networks as an example, but it should be noted that the scheme also applies to wired networks (with shared wired medium).

The standard multicast solution for IEEE 802.11 WLANs is one example of inefficient filtering since in general stations must subscribe to receive multicast data frames from a particular group address. If the receiver does not subscribe to receive multicast frames from this particular group address, it discards all multicast frames. In theory, multicast and broadcast frames can reduce network utilization by allowing a station to send a single frame to many destinations simultaneously. But if the sending station targets a small number of destination stations broadcast and multicast traffic can create additional processing for unintended stations wasting valuable battery resources in them. Moreover, generally the current multicast solutions do not allow a terminal to handle several multicast group addresses simultaneously. The same energy consumption problem gets even worse when the multicast is implemented at the IP layer since all non-intended multicast packets must go through the MAC receiver processing until getting to the network layer when they are finally discarded.

Another example of large energy constraints can be found in wireless sensor networks, which have become real commodities in the market on recent years. A wireless sensor network consists of hundreds or thousands of low cost nodes which could either have a fixed location or randomly deployed to monitor the environment. Sensors usually communicate with each other using a multi hop approach. The flowing of data ends at special nodes called base stations (sometimes they are also referred to as sinks). A base station links the sensor network to another network (like a gateway) to disseminate the data sensed for further processing. Due to the small size of the sensors, one of the biggest problems of sensor networks is power consumption, which is greatly affected by the communication between nodes. Another important problem to deal with is the packet size as the packet loss ratio tends to increase rapidly with it. This happens as a result of the low transmit power, multiple wireless hops, and many times difficult propagation conditions. To reduce the packet size while still transmitting the same amount of data is quite valuable for sensor networks.

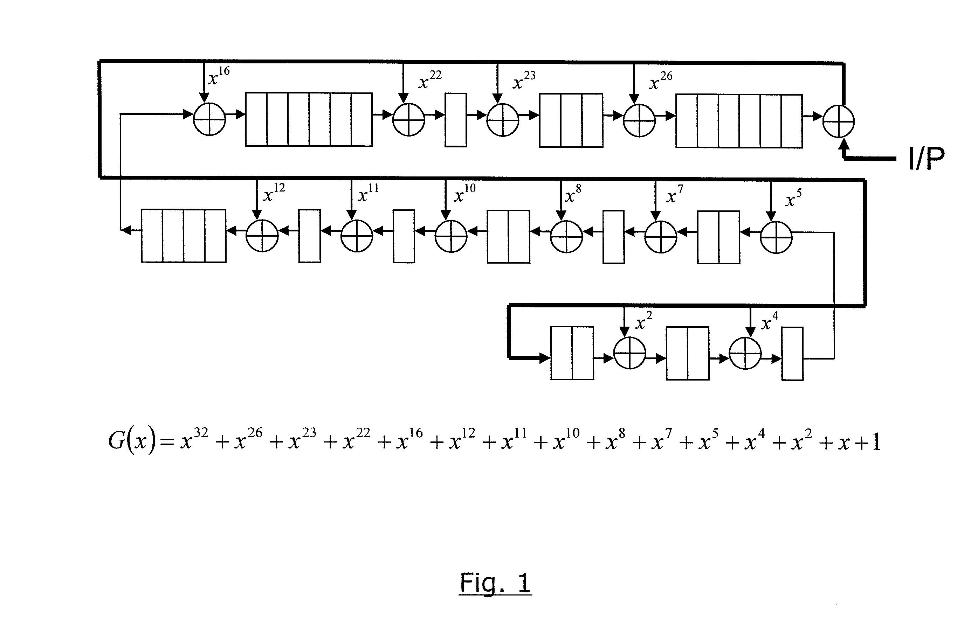

In a conventional wireless network, the MAC receiver calculates the CRC of the incoming multicast frame on real-time while receiving the header and data payload using a shift-register system like the one from an 802.11 receiver shown in the example of Fig. 1. Fig. 1 just shows one example and there are many possible implementations for the CRC check known in the prior art. After the whole frame has arrived, the calculated CRC value is compared with the CRC value attached at the tail of the frame. If both CRC values are equal, the packet reception is interpreted as correct and the multicast packet is sent to higher layers for further processing. If both CRC values are different, the received frame is interpreted as incorrect and the frame is simply discarded.

Thus, in the conventional procedure a given terminal can figure out whether packets are intended for itself or not only after going through the CRC check. If, for instance, a given WLAN terminal is interested in receiving a particular multicast stream out of a set of p possible streams being simultaneously transmitted over the common wireless channel, it must waste a large amount of battery resources while processing in the MAC and IP layers the undesired packets from other *p-1* streams.

This additional processing in the IP layer of unintended packets would not be necessary if all packets could be conveniently filtered out in the MAC layer.

In the following there will be described the conventional solutions for three basic applications or scenarios where the conventional CRC check leaves room for some improvement.

### i) WLAN multicast

In the standardized multi-cast solution for 802.11 infrastructure WLANs (see Wireless LAN Edition, IEEE Std. 802.11-1999 (R2003) and its amendments), a multicast packet includes a group address that delivers the same packet to more than one destination. If the destination address refers to all nodes on the network, then the packet is a broadcast packet, which includes all ones as the address.

The use of multicasting, meaning delivery of information using multicast packets, conserves the bandwidth of a network because only the transmission of a single packet is necessary rather than sending packets individually addressed to each node. This is especially important with wireless networks having limited throughput available as in case of 802.11 WLANs.

If a large group of wireless clients, for example, need to receive a particular video stream, then multicasting really pays off. The use of unicast packets to send the stream to each recipient individually would require many separate video streams, resulting in major performance impacts to the wireless network. With multicasting, only one stream is necessary. Of course this assumes that each client needs to receive the same video at the same time.

The 802.11 (Wi-Fi) standards specify support for multicasting as part of asynchronous services. An 802.11 client station, such as a wireless laptop or PDA (not an access point), begins a multicast delivery by sending multicast packets in 802.11 unicast data frames directed to only the access point. The access point responds with an 802.11 acknowledgement frame sent to the source station if no errors are found in the data frame. If the client sending the frame does not receive an acknowledgement, then the client will retransmit the frame. With multicasting, the leg of the data path from the wireless client to the access point includes transmission error recovery. The 802.11 protocols ensure reliability between stations in both infrastructure and ad hoc configurations when using unicast data frame transmissions. After receiving the unicast data frame from the client, the access point transmits the data (that the originating client wants to multicast) as a multicast frame, which contains a group address as the destination for the intended recipients. Each of the destination stations with a MAC address equal to the multicast's group address can receive the frame; however, they do not respond with acknowledgements. As a result, multicasting does not ensure a complete, reliable flow of data.

### ii) Energy consumption in sensor networks

In order to deal with this issue, aggregation points are introduced to the network. This reduces the total number of messages exchanged between nodes and saves some energy. Usually, aggregation points are regular nodes that receive data from neighboring nodes, perform some kind of processing, and then forward the filtered data to the next hop. Similar to aggregation points is clustering. Sensor nodes are organized into clusters, each cluster having a "cluster head" as the leader. The communication within a cluster must travel through the cluster head, which then is forwarded to a neighboring cluster head until it reaches its destination, the base station. Another method for saving energy is setting the nodes to go idle (into sleep mode) if they are not needed and wake up when required. Of course, the challenge is to find a pattern at which energy consumption is made evenly for all the nodes in the network.

### iii) Increase of security in 802.11 WLANs

The area of security in WLANs is one of the most actively researched and developed during recent years. Among several possible security measures one can mention MAC address filtering, encryption through the static Wired Equivalence Privacy (WEP) key or the more recent Wi-Fi Protected Access (WPA) key that uses a master password from which the system generates keys that change continuously. The last solution comes with the standard IEEE 802.11 i, which offers a level of security sufficient to satisfy most users by making use of the sophisticated Advanced Encryption Standard (AES).

### SUMMARY OF THE INVENTION

According to one embodiment there is provided a method for using an error code in transmission of data from a transmitter to a receiver, said method comprising on the transmitter side:
calculating an error code based on the data to be transmitted;
encoding said calculated error code using an identifier which is specific for a particular entity or feature on the transmitter side to obtain an encoded error code;
transmitting said encoded error code and said data to be transmitted from said transmitter to said receiver, and said method comprising at the receiver side:
   calculating an error code based on the data which has been transmitted;
   encoding said calculated error code using an identifier which is specific for a particular entity or feature in the transmitter side to obtain an encoded error code;
   comparing said encoded error code which has been obtained on the receiver side with the encoded error code which has been transmitted by said transmitter;
   filtering the data which has been transmitted from said transmitter to said receiver based on said comparison result.

Encoding the calculated error code using an identifier makes it possible to use the error code for more than merely error correction or detection, namely to check whether the received data is labelled by the identifier which has been used to encode the calculated error code. Thereby actually two check operations can me merged into a single one, namely the error check and the identifier check.

According to one embodiment said calculating of an error code comprises one of the following:
calculating a forward error correction code;
calculating a cyclic redundancy check code.

These are two examples where the encoding of the error code can be usefully applied, and since these operations are typically performed at the MAC layer the checking of an identifier which often is done at higher layers can thereby be performed at the MAC layer and be integrated into the MAC layer error check operation.

According to one embodiment said identifier is one or a combination of the following:
a multicast stream identifier;
a source address;
a destination address;
a cryptographic key;
an operator ID,
an access point identifiers;
a congestion control-related identifier.

The use of a multicast stream identifier makes it possible to filter at the MAC layer a desired multicast data stream among a plurality of data streams. Using an address as the identifier makes it possible to save packet space by integrating the address and the error code into a single data field. The other identifiers mentioned above may also be helpful for filtering the received data stream based on them.

According to one embodiment said encoding of said calculated error code comprises one of the following:
performing an XOR operation between said identifier and said calculated error code;
calculating a hash function based on said identifier and said calculated error code.

An XOR function is an operation which is relatively easy to implement in hardware. A hash function is more complicated but also is more difficult to be identified by an attacker.

According to one embodiment said identifier comprises a source and/or a destination address, and said encoded error code is used in said data to be transmitted to operate simultaneously as address identifier and as error code.

In this manner the address and the error code field in the frame to be transmitted can be merged into a single field thereby reducing the size of the frame.

According to one embodiment there is provided an apparatus for using an error code in transmission of data from a transmitter to a receiver, said apparatus comprising:
a module for calculating an error code based on the data to be transmitted;
a module for encoding said calculated error code using an identifier which is specific for a particular entity or feature on the transmitter side to obtain an encoded error code;
a module for transmitting said encoded error code and said data to be transmitted from said transmitter to said receiver.

In this manner there can be provided a transmitter which uses the encoding of the error code.

According to one embodiment there is provided an apparatus for using an encoded error code which has been sent together with data from a transmitter, said apparatus comprising:
calculating an error code based on the data which has been transmitted;
encoding said calculated error code using an identifier which is specific for a particular entity or feature in the transmitter side to obtain an encoded error code;
comparing said encoded error code with said encoded error code which has been transmitted by said transmitter;
filtering the data which has been transmitted from said transmitter to said receiver based on said comparison result.

In this manner there can be provided a receiver which uses the encoding of the error code.

According to one embodiment there is provided a computer program comprising program code which when being executed by a computer enables said computer to carry out a method according to one of the embodiments of the invention.

### DESCRIPTION OF THE DRAWINGS

Fig. 1 schematically illustrates a CRC calculation according to the prior art.
Fig. 2 schematically illustrates a conventional multicast scheme in an 802.11 network.
Fig. 3 shows a flowchart schematically illustrating a reception method according to the prior art.
Fig. 4 shows a flowchart schematically illustrating a method according to an embodiment of the invention.
Fig. 5 schematically illustrates a transmission and reception method according to an embodiment of the invention.
Fig. 6A and Fig. 6B schematically illustrate the configuration of a data packet in a wireless sensor network.
Fig. 7 schematically illustrates a block diagram of an encoder according to an embodiment of the invention.

### DETAILED DESCRIPTION

In the following embodiments of the invention will be described in detail referring to the accompanying drawings. At first, however, some terms which will be used in the following description are explained.
- WLAN: : Wireless Local Area Network
- CRC: : Cyclic Redundancy Check
- XOR: : exclusive OR operation
- MAC: : Medium Access Control
- MIMO: : Multiple Input Multiple Output

According to one embodiment there is provided a method to encode and decode cyclic redundancy (CRC) of multicast packets based on previously defined identifiers or labels, which must be known by both transmitter and receiver. The mechanism allows for example terminals to filter simultaneous streams during the CRC check process in the medium access control layer. Using the proposed scheme terminals can save processing time and valuable battery resources by avoiding additional processing of multicast packets in higher layers, and even increase the throughput by saving frame space in packet transmissions. This will become more apparent from the following description.

Cyclic Redundancy Check (CRC) is used by most wireless technologies to detect transmission errors. On the transmission side the cyclic redundancy check code for a packet or a frame to be transmitted is calculated and then the calculated CRC code is sent in a separate field of the same frame. On the side of the receiver for each received frame the CRC code is also calculated, and the calculated value is compared with the CRC value which was transmitted by the sender. If both coincide the received frame or packet is regarded as having been transmitted without error, and if both differ the received packet or frame is discarded. This procedure is usually carried out at the MAC layer.

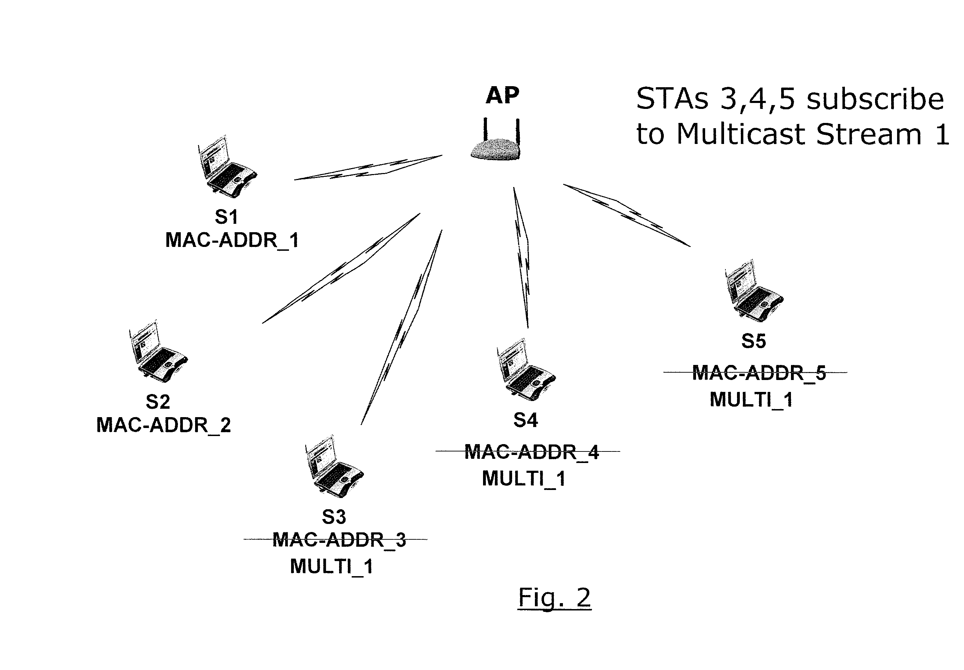

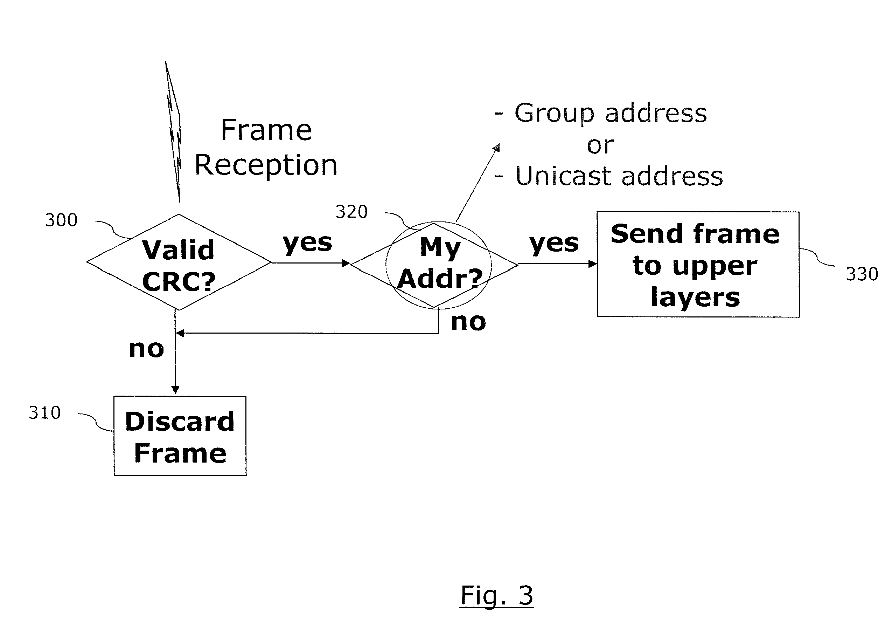

In addition to the check for transmission errors, in case of multicast transmission there is further performed a check whether the received packet or frame is indeed intended for the present terminal. This is now explained in connection with Figures 2 and 3.

In Fig. 3 five stations S1 to S5 are shown of which three stations, S3, S4, and S5 receive a multicast session. For that purpose their MAC address has been replaced by the multicast group address.

The procedure which is carried out by these stations will now be explained in connection with Fig. 3 showing a flowchart or the receiving operation at the MAC layer. After the frame reception in operation 300 it is checked whether the CRC code is valid, in other words whether the code calculated based on the received frame coincides with the one which has been transmitted. If this is not the case, in operation 310 the frame is discarded If, however, the codes coincide the address contained in the address field of the received frame is checked in operation 320 as to whether it coincides with the address of the receiving station. For a multicast transmission this address may be the multicast group address, for a unicast transmission it may be the "normal" MAC address of the receiving station.

If both addresses don't coincide, the frame is discarded in operation 310, otherwise the frame in operation 330 is forwarded to upper layers for further processing.

It can be seen from Fig. 3 that the address check involves an additional operation after the CRC check operation.

According to one embodiment such an additional operation can be avoided by a filtering mechanism which is based on an identifier-encoded cyclic redundancy check (CRC).

The mechanism according to one embodiment encompasses two phases: i) CRC encoding based on identifier labels associated to a particular entity or feature on the transmitter side, and ii) CRC decoding using the desired identifier labels on the receiver side.

The term "CRC encoding" here means that the CRC is combined with some identifier based on a mathematical operation which as a result contains information both about the CRC as well as about the identifier. Such a combination for example could be carried out by performing a logical XOR operation (denoted by the operator ⊕) between the CRC code bit sequence and the bit sequence representing the identifier. In this manner the resulting bit sequence contains (implicitly) both information elements, the CRC code and the identifier. If the same XOR operation is also performed at the receiving side, the CRC check operation can implicitly also include a check regarding the identifier. While both information elements (CRC code and identifier) are implicitly included in the resulting code, nevertheless the resulting code does not contain more bits that the CRC code alone since the resulting code is based on a XOR operation.

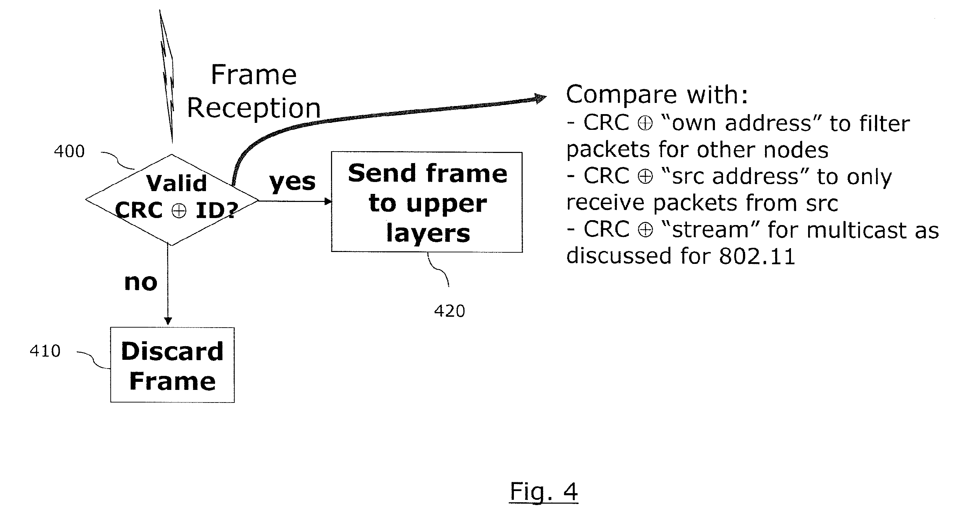

The flowchart shown in Fig. 4 schematically illustrates the operations performed on the receiving side in such a case. After reception of the frame the CRC check is performed in operation 400. However, the data based on which the CRC check is performed is not only the CRC but instead based on a code which is based on a combination of the CRC and some identifier using some mathematical operation, here an XOR operation. This resulting code which has been calculated on the receiver side is then compared with the corresponding resulting code which has been calculated at the transmitter side and was transmitted together with the frame. If the comparison in operation 400 results in the two codes being different, the frame is discarded in operation 410. If the code comparison in operation 400 results in a valid code, the frame is forwarded to upper layers for further processing in operation 420.

One can see from a comparison of Figures 4 and 3 that in the embodiment illustrated in Fig. 4 the additional comparison step (operation 320 in Fig. 3) has become unnecessary due to the operations 320 and 300 being combined into a single operation 410 in the embodiment of Fig. 4.

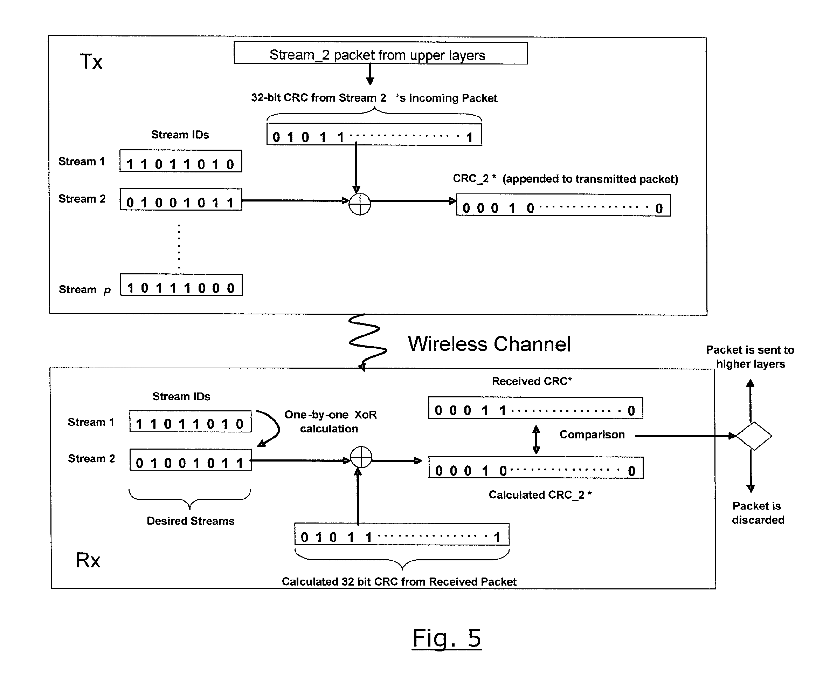

As mentioned already, the mechanism according to one embodiment encompasses two phases: i) CRC encoding based on identifier labels associated to a particular entity or feature on the transmitter side, and ii) CRC decoding using the desired identifier labels on the receiver side. In the following there will be described an embodiment in which the details of each of these two phases are explained using the example of MAC layer multicast in 802.11. In this embodiment the identifier is a multicast stream ID, however, the same mechanism can also be applied for filtering packets with respect to other types of identifiers such as source and destination addresses, operator or access point identifiers, etc. The embodiment will now be described referring to Fig. 5, whereas the upper part shows the transmitting side and the lower part of Fig. 5 shows the receiving side.

At first the operation on the transmitting side will be explained. Here it is assumed that there are p possible multicast data streams which could be transmitted by a transmitter, and for each of the streams there is a corresponding stream ID. The transmitter and the receiver which want to apply the mechanism for a certain stream must be aware of the corresponding stream ID. This is shown on the left side of the upper half of Fig. 5 for the stream IDs 1 to p. The transmitter then relates a unique identifier label (here the stream ID) to a particular entity or feature (here the multicast data stream stream_2), which is then used to encode the CRC of the next packet it intends to transmit. Every identifier label is represented by a locally unique binary sequence of 0s and 1s of length n. When the next frame is ready for transmission, the corresponding CRC value of the data is calculated. Using the corresponding identifier label the transmitter encodes the CRC value and appends it to tail of the data frame following the conventional 802.11 MAC transmitter procedure. The CRC encoding technique can be any hash function or mathematical operation between the valid CRC and the identifier label that allows the receiver extracting the original CRC value after performing the inverse encoding process. For instance, the transmitter could perform a block-based XoR operation between the identifier label and the CRC as shown in the 802.11 receiver example of Fig. 2 in order to encode the CRC. This then results in a CRC code CRC_2* shown on the right-hand side of the upper part of Fig. 2. This resulting CRC code is then transmitted, e.g. by appending it to the transmitted data packet or frame.

Now the operation at the receiving side will be explained. The maximum number of identifier streams which can be received by a single terminal are denoted as m. In case of the proposed mechanism, the MAC receiver calculates the CRC of the incoming multicast frame in real-time while receiving the header and data payload. Upon receiving all bits of the header and data payload, the calculated CRC value is encoded using each of the desired identifiers following the same encoding procedure as was executed at the transmitter side. For that purpose according to one embodiment the receiver has m memory registers and each of them stores the result of the calculated CRC encoded with one of the identifier labels from the list of desired streams. Upon receiving the CRC value attached on the tail of the frame, the received CRC is compared with each of the encoded CRC values stored in these registers. If any of the encoded CRC values matches the received CRC value the frame is interpreted as correctly received and is sent to higher layers for further processing. In case that none of the encoded CRC values stored in the memory registers matches the received CRC value the frame is interpreted as wrongly received or having a different destination terminal, and subsequently the frame is discarded. In Fig. 5 one can see that the CRC calculated from the received packet and XORed with the ID of stream 2 results in the CRC code CRC_2 which coincides with the received CRC_2* if during the transmission no error occurred. This results in the packet being forwarded to higher layers. However, for packets where the encoded value of the CRC as calculated at the receiving side and the transmitted encoded CRC value do not coincide (either due to transmission errors or due to the packet being intended for another recipient) the packet will be discarded.

One of the main advantages brought by the proposed scheme is that it allows MAC receivers to immediately discard a non-desired multicast stream's packet instead of sending it to higher layers for further processing, thus allowing terminals to save valuable battery resources or even decrease the control overhead. The mechanism does not introduce any further requirement to the receivers other than the need to have a set of memory registers and to encode/decode CRC values, which are considered small changes for most of the existent MAC transceivers in both WLANs and sensor networks.

The mechanism therefore provides an easy approach to differentiate multicast streams at the MAC layer on a way that is backward compatible with the standard 802.11. Moreover, the mechanism can be easily extensible to the use of forward error correction techniques instead of CRC. In fact, the scheme can be applied to any error correction code which is transmitted in addition to the payload.

An alternative straight-forward solution might be to allow a single terminal to hold multiple MAC group addresses besides its own individual address. In comparison with this solution, the proposed mechanism features the following advantages:
1) It saves one MAC procedure, by integrating the address check into the CRC check for every packet.
2) The original 802.11 standard allows a terminal to hold either an individual address or a group address. The latter can be either a broadcast address or a multicast address. The alternative group address solution would be against the individual MAC address nature of the standard 802.11 and hence it could face many difficulties to be accepted and standardized. In contrast, the mechanism according to the described embodiment does not modify the MAC addressing scheme specified in 802.11.

In the following a further embodiment will be described which outlines the application of the mechanism in the context of sensor networks. Sensor networks and their nodes are sensitive to energy consumption due to node restrictions, and therefore small packet size is important in this scenario. Also in order to achieve low packet error rates, small packet sizes are desirable.

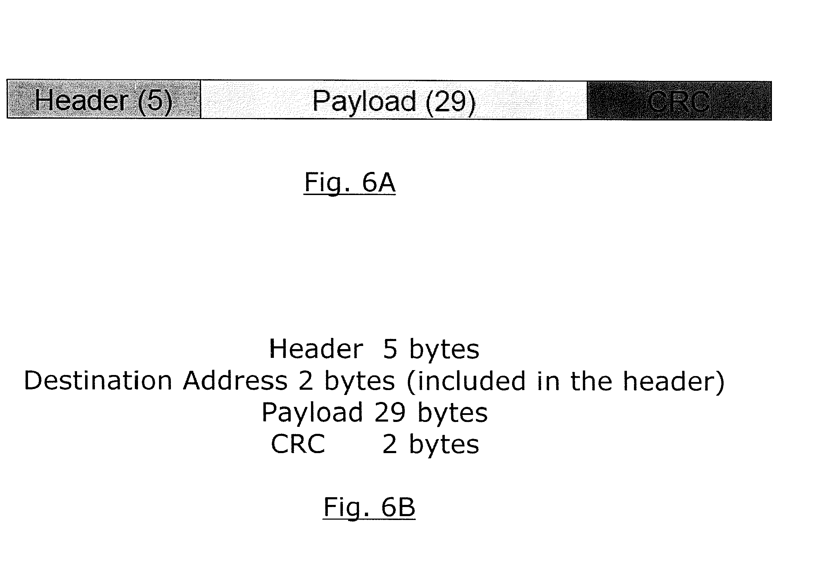

The format of a typical packet in a sensor network environment (e.g. in accordance with the standard IEEE 802.15.4 or the well known format of the socalled TinyOS 2.x platform) is shown in Figures 6A and 6B. As shown in Fig. 6A the whole packet consists of a header consisting of 5 bytes, a payload of 29 bytes, and a CRC code having two bytes. Fig. 6B further details the individual components of one type of frame in 802.15.4. It can be seen that the first 3 bytes are reserved for control information and the source address, 2 bytes of the header are for the destination address, then comes the payload and the last two bytes are reserved for the CRC code.

According to this embodiment the identifier which is combined with the CRC code is the destination address (two-byte field included in the header) In other words, the CRC code is encoded using this address value. The resulting code then implicitly contains information about the CRC code and the address, and this means that the information which is contained in the two bytes from the destination address and the last two bytes shown in Fig. 6B can be combined into a single item consisting of two bytes, thereby resulting in a saving of two bytes of the packet size. The resulting packet may then just consist of only 34 bytes instead of the 36 bytes of the conventional frame shown in Fig. 6B. E.g. the resulting packet may not contain the fifth item (the CRC code) and may instead of the first item "address" contain a new item which consists of the result of an XOR operation between the "address" and the CRC shown in Fig. 6B.

It will, however, be apparent for the skilled person that in case of this embodiment the CRC check must be performed (it cannot be "switched off") because it actually includes the address decoding and without address decoding the packet could never reach its destination.

In comparison with existing solutions of sensor networks the application of the CRC-coded filtering in sensor networks leads to the following advantages:
- A reduction of the overhead is possible by combining source and destination addresses into a single identifier (based on the example of the well-known frame format of the Tiny OS platform)
- Energy saving due to lower transmission energy required per packet
- Lower packet loss ratio due to smaller packets

In the following there will be explained a further embodiment where the mechanism of the invention is applied to WLAN security. In this embodiment the mechanism in principle operates as explained before in connection with the WLAN application, however, the operation actually has also a security related aspect. Assume that the receiving node is not aware of the mechanism of encoding the CRC code, such a node will not be able to receive the packets because they are already dropped at the MAC layer due to the lack of successful comparison results in the check procedure.

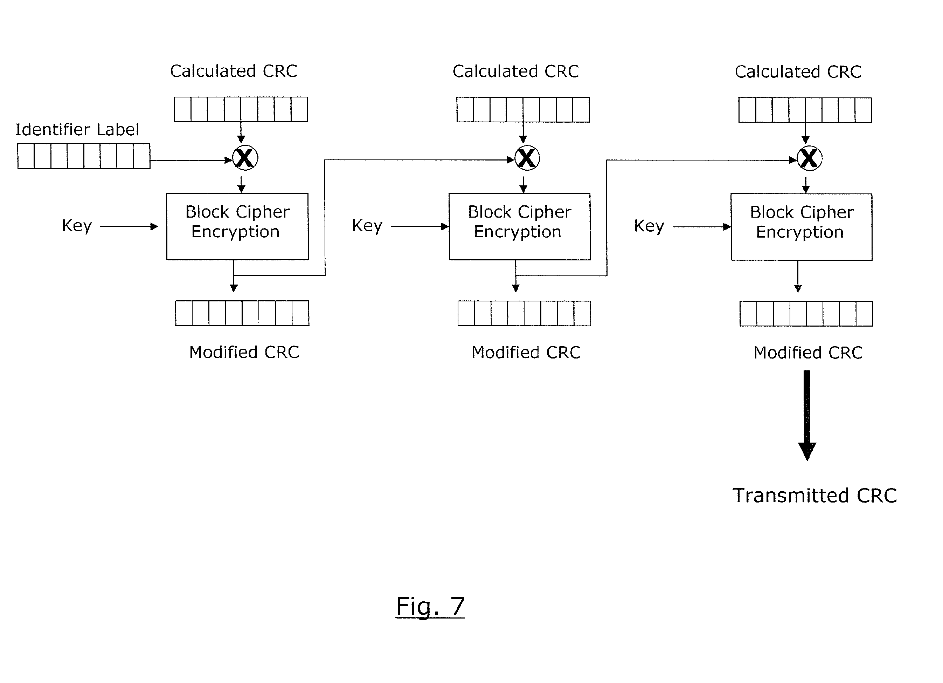

If the mechanism is applied for security purposes, it may be advantageous to use a hash function of a combination of both the identifier label and the CRC rather than a simple XORing of them. An example of such a hash function is now explained in connection with Fig. 7.

Fig. 7 shows a block diagram of an encoder where the key shared by transmitter and receiver in cryptographic block cipher techniques are used for encrypting the calculated CRC for a given MAC frame in 802.11. Figure 7 shows a cipher block chaining CRC encryption. The identifier or label is used as an initialization vector to encode the CRC. After an XOR operation a block cipher encryption is performed using a key as an input and some block cipher technique like DES (data encryption standard) or AES (advanced encryption standard). The resulting modified CRC is used then as an input in the next stage where it is XORed with the calculated CRC and the block cipher encryption is performed once again. Then a third stage follows to finally obtain the modified or encoded CRC which is to be transmitted. On the receiver side then the inverse operation is to be performed for all desired identifiers.

With such a mechanism, since frames are dropped at the CRC checksum step in the MAC layer, they are not easily detectable. Even if a mischievous node detects the packet dropping, it won't be able to decode the packets correctly if it doesn't know how the encoding mechanism operates and if it doesn't know the hash function.

Wile the invention has been described before by means of exemplary embodiments, it will be apparent for the skilled person that modifications of the described embodiments are possible. The identifier used for encoding the CRC could be, for instance, a multicast stream ID, a source or destination address or a combination of both, a cryptographic key, an operator ID, access point identifiers or even dynamic identifiers like congestion control-related identifiers etc. Moreover, the error code which is encoded based on the identifier could be a CRC code, a forward error correcting code like a Reed-Solomon code, a Hamming code or any other error code which is transmitted in addition to the payload for the purpose of error correction or error detection. Furthermore the encoding of the error code based on or using the identifier could be performed by an XOR operation, by a hash function or by any mathematical operation which combines the two input values (error code and identifier) in such a manner that the result contains at least implicitly information about both input values. Thereby the result preferably not a mere concatenation of both values but a new data string which results from a mathematical operation combining the both input values. Preferably the resulting value has a bit length which corresponds to the bit length or the error code,, so that the resulting error code may be regarded as being "masked" by the identifier through applying the mathematical operation using the error code and the identifier as an input to obtain the resulting error code.

According to a further modification the encoding of the error code may take into account more than one additional variable, such as e.g. the operator ID and the multicast stream ID, or the multicast group ID and the multicast stream ID. In this case some degree of freedom is added, but in effect even more than one additional parameter (in addition to the error code) can be checked when performing the checksum operation. Again in this embodiment the resulting error code may result from an XOR operation or from a more complex mathematical operation like a hash function which has as an input the multiple parameters.

According to one embodiment the bit sequence resulting from encoding the error code has the same bit length as the error code itself. This has the advantage that the no modification has to be made to the conventional error code processing, and no additional bits are necessary. According to another embodiment the bit sequence which results from the encoding procedure (like the XOR operation or the hash function) has at least a defined bit length so that the hardware for processing the bit sequence can be suitably designed.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out an enhanced error code check as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the mechanisms as described before.

## Claims

1. A method for using an error code in transmission of data from a transmitter to a receiver, said method comprising on the transmitter side:
calculating an error code based on the data to be transmitted;
encoding said calculated error code using an identifier which is specific for a particular entity or feature on the transmitter side to obtain an encoded error code;
transmitting said encoded error code and said data to be transmitted from said transmitter to said receiver, and said method comprising at the receiver side:
calculating an error code based on the data which has been transmitted;
encoding said calculated error code using an identifier which is specific for a particular entity or feature in the transmitter side to obtain an encoded error code;
comparing said encoded error code which has been obtained on the receiver side with the encoded error code which has been transmitted by said transmitter;
filtering the data which has been transmitted from said transmitter to said receiver based on said comparison result.

2. The method of claim 1, wherein said calculating of an error code comprises one of the following:
calculating a forward error correction code;
calculating a cyclic redundancy check code.

3. The method of claim 1 or 2, wherein said identifier is one or a combination of the following:
a multicast stream identifier;
a source address;
a destination address;
a cryptographic key;
an operator ID,
an access point identifiers;
a congestion control-related identifier.

4. The method of one of the preceding claims, wherein said encoding of said calculated error code comprises one of the following:
performing an XOR operation between said identifier and said calculated error code;
calculating a hash function based on said identifier and said calculated error code.

5. The method of one of the preceding claims, wherein said identifier comprises a source and/or a destination address, and said encoded error code is used in sad data to be transmitted to operate simultaneously as address identifier and as error code.

6. An apparatus for using an error code in transmission of data from a transmitter to a receiver, said apparatus comprising:
a module for calculating an error code based on the data to be transmitted;
a module for encoding said calculated error code using an identifier which is specific for a particular entity or feature on the transmitter side to obtain an encoded error code;
a module for transmitting said encoded error code and said data to be transmitted from said transmitter to said receiver,

7. An apparatus for using an encoded error code which has been sent together with data from a transmitter, said apparatus comprising:
calculating an error code based on the data which has been transmitted; encoding said calculated error code using an identifier which is specific for a particular entity or feature in the transmitter side to obtain an encoded error code;
comparing said encoded error code with said encoded error code which has been transmitted by said transmitter;
filtering the data which has been transmitted from said transmitter to said receiver based on said comparison result.

8. The apparatus of one of claims 6 or 7, wherein said calculating of an error code comprises one of the following:
calculating a forward error correction code;
calculating a cyclic redundancy check code.

9. The apparatus of one of claims 6 to 8, wherein said identifier is one or a combination of the following:
a multicast stream identifier;
a source address;
a destination address;
a cryptographic key;
an operator ID,
an access point identifiers;
a congestion control-related identifier.

10. The apparatus of one of claims 6 to 9, wherein said encoding of said calculated error code comprises one of the following:
performing an XOR operation between said identifier and said calculated error code;
calculating a hash function based on said identifier and said calculated error code.

11. The apparatus of one of claims 6 to 10, wherein said identifier comprises a source and/or a destination address, and said encoded error code is used in said data to be transmitted to operate simultaneously as address identifier and as error code.

12. A computer program comprising program code which when being executed by a computer enables said computer to carry out a method according to one of claims 1 to 5.
